# EUROPEAN PATENT APPLICATION

(11) **EP 4 756 584 A1**
(43) Date of publication of application: **10.06.2026**
(21) Application number: 24848561.7
(22) Date of filing: 20.02.2024
(51) Int. Cl.: G06F 3/041

(54) **CAPACITIVE SENSOR**

(30) Priority: 31.07.2023 JP 2023124412
(71) Applicant: Alps Alpine Co., Ltd., Tokyo 145-8501 (JP)
(72) Inventor: YAMAI, Tomoyuki, Tokyo 145-8501 (JP)
(74) Representative: Maiwald GmbH
(86) International application number: PCT/JP2024/006101
(87) International publication number: WO 2025/027898

(57) **Abstract**

A capacitive sensor according to an aspect of the present invention includes: a detection region having a drive electrode and a detection electrode on a substrate; and a non-detection region that is located outside the detection region as viewed from a normal direction to the substrate and that has a drive wire connected to the drive electrode and a detection wire connected to the detection electrode. The non-detection region includes a dummy lead wire disposed apart from the drive wire and the detection wire, and an anticorrosive section that is disposed between at least one of the drive wire and the detection wire and the dummy lead wire and that is not in contact with any of the drive wire, the detection wire, and the dummy lead wire. Accordingly, corrosion resistance of the wires can be enhanced.

## Description

### Technical Field

The present invention relates to capacitive sensors, and particularly, to a capacitive sensor used in a touchscreen.

### Background Art

Patent Literature 1 discloses a touchscreen with reduced inter-wire capacitance between row-direction and column-direction wires by providing a floating wire in a wiring pattern provided within a detectable area. As shown in Fig. 2 of Patent Literature 1, in this touchscreen, an area that is outside the detectable area and where a lead wire for a row-direction wire and a lead wire for a column-direction wire extend parallel is provided with a dummy lead wire that is located between the lead wires and that is supplied with a reference potential, such as a ground potential. By providing a dummy lead wire in this manner, the inter-wire capacitance (crosstalk capacitance) between the lead wires located adjacent to both sides of the dummy lead wire can be reduced. It is preferable that crosstalk capacitance does not occur as much as possible since it acts as a noise source and lowers the detection accuracy of the touchscreen.

### Citation List

### Patent Literature

PTL 1: PCT International Publication No. WO 2014/050306

### Summary of Invention

### Technical Problem

In a case where a dummy lead wire is provided, as described above, the electric potential to be applied to the dummy lead wire is sometimes controlled by an IC, whereby crosstalk capacitance can be particularly reduced. When the electric potential to be applied to the dummy lead wire is to be controlled by the IC, that is, when the electric potential is to be dynamically controlled, the electric potential is set on the premise of the dielectric constant of an insulator located between each lead wire and the dummy lead wire. From the standpoint of enhancing the versatility of this IC (i.e., ensuring a wide operable range), the distance between the wires adjacent to the dummy lead wire is sometimes set to be larger than the distance between other two adjacent wires. In that case, the wires adjacent to the dummy lead wire become isolated sections.

In view of this, since the lead wires are located in a non-detection region in a capacitive sensor, wires containing a metallic material with high conductivity are normally used. In order to prevent corrosion of the wires containing this metallic material, an insulation layer and a protection layer are provided around the wires. However, in applications that require high reliability, such as industrial machinery or in-vehicle use, it is required to satisfy more severe environmental test conditions than those for other applications (e.g., exposure at 85°C and 85% humidity for 300 to 1000 hours). Therefore, the wire corrosion prevention methods in the related art are sometimes unable to meet these requirements. In detail, the isolated sections located away from a pattern where the wires containing the metallic material are adjacent to each other in the insulation layer or the protection layer, as described above, are prone to localized corrosion due to an attack by moisture from the insulation layer or the protection layer and a leachate component (such as iodine or acrylic acid) from a constituent member, as compared with non-isolated sections, thus requiring individual countermeasures.

An object of the present invention is to provide a capacitive sensor that enables enhanced corrosion resistance of wires that are isolated sections.

### Solution to Problem

A capacitive sensor according to an aspect of the present invention includes: a detection region having a drive electrode and a detection electrode on a substrate; and a non-detection region that is located outside the detection region as viewed from a normal direction to the substrate and that has a drive wire connected to the drive electrode and a detection wire connected to the detection electrode. The non-detection region includes a dummy lead wire disposed apart from the drive wire and the detection wire, and an anticorrosive section that is disposed between at least one of the drive wire and the detection wire and the dummy lead wire and that is not in contact with any of the drive wire, the detection wire, and the dummy lead wire.

According to this configuration, the anticorrosive section is located at each side of the dummy lead wire supplied with a ground reference potential and having a shielding function, so as to be arranged alongside the drive wire or detection wire that is an isolated section. This can suppress a situation where a substance that causes corrosion (corrosion-causing substance) approaches an isolated wire from around the wire.

In the aforementioned capacitive sensor, the anticorrosive section may have a segment that is juxtaposed with the drive wire or the detection wire in an in-plane direction of a surface of the substrate. Accordingly, the anticorrosive section performs protection over a wide range in the extending direction of the drive wire or the detection wire.

In the aforementioned capacitive sensor, the anticorrosive section may have a segment that overlaps the drive wire or the detection wire as viewed from the normal direction to the substrate. Accordingly, the corrosion prevention effect for the drive wire or the detection wire is enhanced in a first direction.

In the aforementioned capacitive sensor, the anticorrosive section may include a segment composed of a material identical to a material constituting the drive electrode or the detection electrode. Accordingly, the anticorrosive section can be formed in the same process as the process for forming the drive electrode or the detection electrode.

In the aforementioned capacitive sensor, the anticorrosive section is preferably composed of a conductive material and may have a floating potential. Accordingly, even if the anticorrosive section is located in a region between the drive wire or the detection wire and the dummy lead wire, the dielectric constant of this region is less likely to change. Thus, the IC that controls the electric potential of the dummy lead wire to the ground reference potential can properly function even with the presence of the anticorrosive section, thereby appropriately suppressing the crosstalk capacitance between the drive wire and the detection wire.

In the aforementioned capacitive sensor in which the anticorrosive section is composed of a conductive material, the anticorrosive section may have an extension segment that extends in an extending direction of the drive wire or the detection wire. Accordingly, the corrosion prevention effect by the anticorrosive section can be achieved over a wide range in the extending direction of the detection wire.

Furthermore, the extension segment may extend discontinuously in the extending direction of the drive wire or the detection wire. Accordingly, parasitic capacitance occurring in the anticorrosive section can be reduced, thereby achieving more stable suppression of the crosstalk capacitance between the drive wire and the detection wire using the dummy lead wire supplied with the ground reference potential.

### Advantageous Effects of Invention

The present invention can provide a capacitive sensor that enables enhanced corrosion resistance of wires that are isolated sections.

### Brief Description of Drawings

[Fig. 1] Fig. 1 is a schematic plan view illustrating a capacitive sensor according to a first embodiment.
[Fig. 2] Fig. 2 is a schematic cross-sectional view illustrating the capacitive sensor according to the first embodiment.
[Fig. 3] Fig. 3 is an enlarged plan view of area A shown in Fig. 1.
[Fig. 4] Fig. 4 is an enlarged plan view illustrating another example (1) of anticorrosive sections.
[Fig. 5] Fig. 5 is an enlarged plan view of another example (2) of anticorrosive sections.
[Fig. 6] Fig. 6 is a schematic plan view illustrating a capacitive sensor according to a second embodiment.
[Fig. 7] Fig. 7 is a schematic cross-sectional view illustrating the capacitive sensor according to the second embodiment.

### Description of Embodiments

An embodiment of the present invention will be described in detail below with reference to the appended drawings. In the following description, identical members are given the same reference sign, and descriptions of already-described members are omitted, where appropriate.

### (First Embodiment)

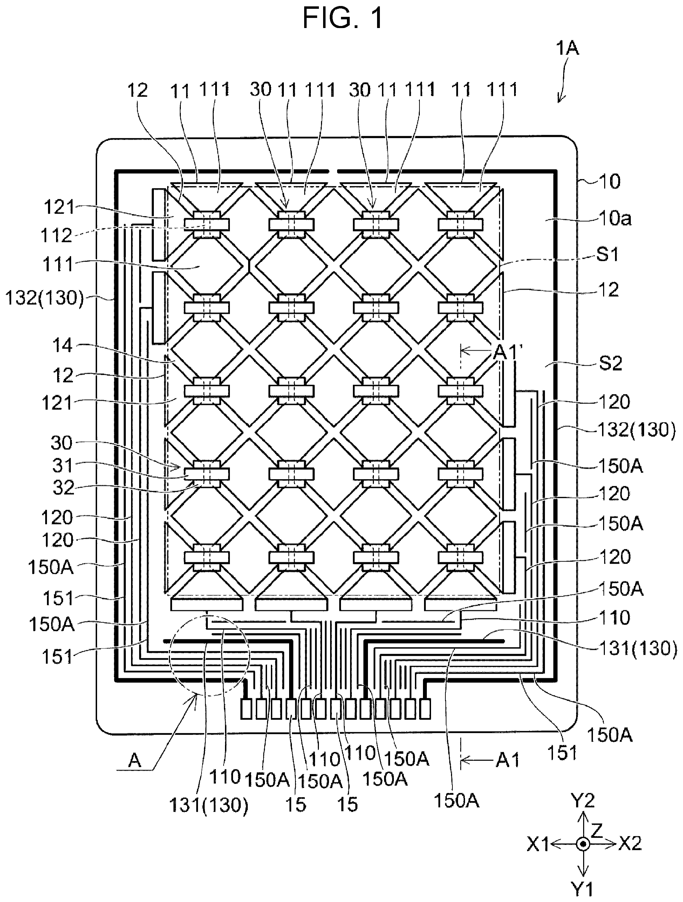

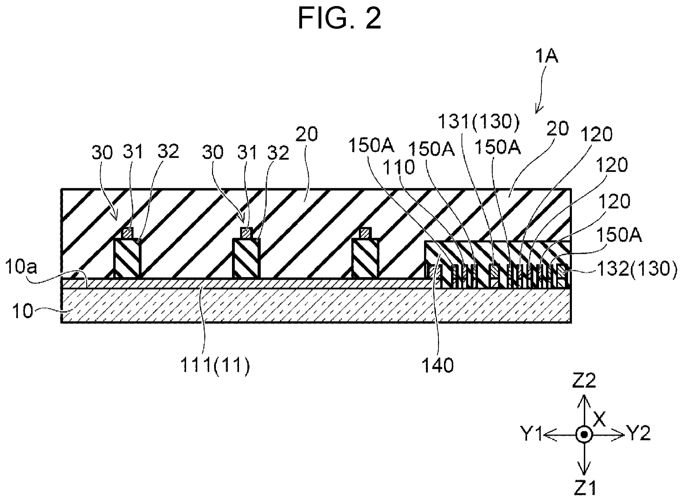

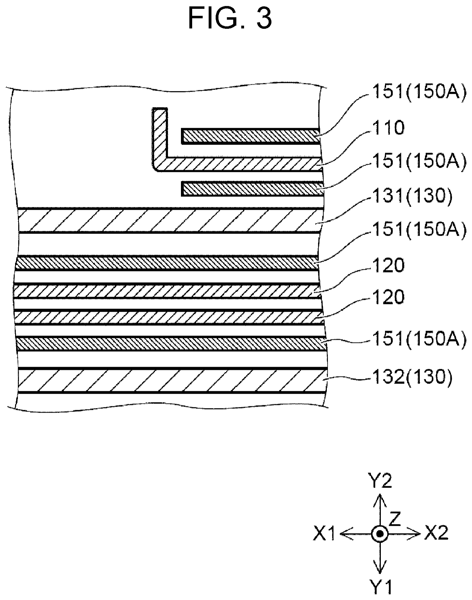

Fig. 1 is a schematic plan view illustrating a capacitive sensor according to a first embodiment. Fig. 2 is a schematic cross-sectional view illustrating the capacitive sensor according to the first embodiment, taken along line A1-A1' shown in Fig. 1. Fig. 3 is an enlarged plan view of area A shown in Fig. 1. In this description, the terms "transparent" and "translucent" indicate a state where the visible light transmittance is 50% or more (preferably, 80% or more). Furthermore, it is preferable that the haze value be 6% or less.

A capacitive sensor 1A according to this embodiment is an input device used in, for example, a touchscreen. The capacitive sensor 1A includes a detection region S1 that has drive electrodes 11 and detection electrodes 12 on a substrate 10, and a non-detection region S2 that is located outside the detection region S1 as viewed from a first direction (Z1-Z2 direction) serving as a normal direction to the substrate 10 and that has drive wires 110 connected to the drive electrodes 11 and detection wires 120 connected to the detection electrodes 12.

The substrate 10 is translucent and is composed of a film-like material, such as polyethylene terephthalate (PET), polycarbonate (PC), cyclo-olefin polymer (COP), polymethyl methacrylate (PMMA), or polyimide (PI).

The drive electrodes 11 are disposed in a direction (Y1-Y2 direction) extending along a principal surface 10a of the substrate 10. The detection electrodes 12 are disposed in an X1-X2 direction that extends along the principal surface 10a of the substrate 10 and that is orthogonal to the Y1-Y2 direction. The drive electrodes 11 and the detection electrodes 12 are insulated from each other. In this embodiment, multiple drive electrodes 11 are disposed at a predetermined pitch in the X1-X2 direction, and multiple detection electrodes 12 are disposed at a predetermined pitch in the Y1-Y2 direction.

Each drive electrode 11 has multiple first transparent electrodes 111. In this embodiment, the multiple first transparent electrodes 111 have a shape that is close to a rhombus and are arranged in the Y1-Y2 direction. In other words, the multiple first transparent electrodes 111 are disposed parallel to the Y1-Y2 direction. Two neighboring first transparent electrodes 111 and 111 are electrically connected by a coupling section 112.

Each detection electrode 12 has multiple second transparent electrodes 121. The multiple second transparent electrodes 121 have a shape that is close to a rhombus and are arranged in the X1-X2 direction. In other words, the multiple second transparent electrodes 121 are disposed parallel to the X1-X2 direction.

Each of the first transparent electrodes 111 and the second transparent electrodes 121 has a transparent conductive material having translucency. Examples of the transparent conductive material include an oxide-based material, such as SnO₂, ZnO, ITO (indium tin oxide), IZO (indium zinc oxide), GZO (gallium-doped zinc oxide), AZO (aluminum-doped zinc oxide), or FTO (fluorine-doped tin oxide), a metal nanowire, such as a silver nanowire, a gold nanowire, or a copper nanowire, thin metal formed in a mesh, and a conductive polymer, such as PEDOT/PSS.

The coupling section 112 electrically connecting two neighboring first transparent electrodes 111 and 111 also has, for example, the aforementioned transparent conductive material. In this case, the coupling section 112 may be integrated with the two first transparent electrodes 111 and 111 electrically connected to the coupling section 112. When viewed in the normal direction to the principal surface 10a, insulation sections 14 are located between the first and second transparent electrodes 111 and 121 and the coupling sections 112.

Two neighboring second transparent electrodes 121 and 121 are electrically connected by a bridge wire 31 of a bridge section 30. The bridge section 30 has the bridge wire 31 and an insulation layer 32 from the upper layer. A material constituting the bridge wire 31 may include a transparent conductive material similar to the transparent electrodes, or may include a metal-based material. A material constituting the insulation layer 32 is not limited so long as it has appropriate insulation properties. Specific examples of the material constituting the insulation layer 32 include a resin-based material, such as novolac resin or epoxy resin, and an inorganic material, such as silicon oxide or alumina. A protection layer 20 (see Fig. 2) composed of an insulative material similar to that of the insulation layer 32 is provided on the bridge sections 30.

As shown in Fig. 1, the drive wires 110 routed to the non-detection region S2 outside the detection region S1 are respectively connected to the multiple drive electrodes 11. The detection wires 120 routed to the non-detection region S2 outside the detection region S1 are respectively connected to the multiple detection electrodes 12. Each drive electrode 11 receives a drive voltage via the corresponding drive wire 110, and each detection electrode 12 transmits a detection current to an external circuit via the corresponding detection wire 120.

Each drive wire 110 is connected to one of pad electrodes 15 that are routed to the non-detection region S2 from a Y1 end of the corresponding drive electrode 11 in the Y1-Y2 direction and that are provided at an end of the substrate 10. Each detection wire 120 is connected to one of the pad electrodes 15 that are routed to the non-detection region S2 from an end of the corresponding detection electrode 12 (at an X1 end or an X2 end) in the X1-X2 direction and that are provided at the end of the substrate 10.

A material constituting each of the drive wires 110 and detection wires 120 is not limited so long as it has appropriate conductivity. The material may be the aforementioned material constituting the transparent electrodes, or may be a metal-based material with high conductivity since translucency is not required. Specific examples of the metal-based material include copper, a copper alloy, silver, a silver alloy, aluminum, and an aluminum alloy. By including a metal-based material as the constituent material, high conductivity can be obtained even if the wire width is reduced. In a case where the drive wires 110 or detection wires 120 each have a section composed of a metal-based material, high conductivity can be obtained. However, in a harsh environment, such as a high-temperature high-humidity environment, measures to suppress the occurrence of corrosion may sometimes be required. In this embodiment, an insulation layer 140 composed of the material constituting the insulation layers 32 used in the detection region S1 is provided as a wire protection layer.

The drive wires 110 and the detection wires 120 may each have a multilayer structure. Specific examples of the multilayer structure include a multilayer structure composed of metal-based materials, as in Cu/Ni/Cu, and a multilayer structure composed of a metal-based material and a transparent conductive material, as in Cu/ITO. In this embodiment, as shown in Fig. 2, the drive wires 110 and the detection wires 120 each have a multilayer structure composed of a transparent conductive material, which is the material constituting the detection electrodes 12, and a metal-based material.

A method for forming each of the drive wires 110 and the detection wires 120 is not limited, and examples include a dry process, such as sputtering or vapor deposition, a wet process, such as etching or plating, and a printing process, such as screen printing. The first transparent electrodes 111, the second transparent electrodes 121, the drive wires 110, and the detection wires 120 may each be formed of a photosensitive conductive sheet (i.e., a sheet in which a dry film resist has a conductive layer). The line width of each of the drive wires 110 and the detection wires 120 is appropriately set in accordance with the material constituting the wire, and is about 10 µm as an example.

The non-detection region S2 is provided with the drive wires 110 and dummy lead wires 130 disposed apart from the detection wires 120. The dummy lead wires 130 are set such that the electric potential thereof is lower than those of the drive wires 110 and the detection wires 120, and each function as a shielding wire 131 having a shielding function. From the standpoint of causing the shielding wire 131 to appropriately exhibit its function, each dummy lead wire 130 receives a ground reference potential. This reference potential may be controlled by an IC (not shown) via the corresponding pad electrode 15 connected to one end of the dummy lead wire 130. The dummy lead wire 130 provided with the pad electrode 15 at one end is disposed at a predetermined position in the non-detection region S2 toward the other end. An example of the line width of the dummy lead wires 130 is about five times the line width of the drive wires 110 and the detection wires 120 (e.g., about 50 µm).

The material constituting each dummy lead wire 130 is not limited so long as it has appropriate conductivity. Preferably, the dummy lead wires 130 contain the same material as the drive wires 110 and the detection wires 120, so that the dummy lead wires 130 can be formed simultaneously in the process for forming the above wires. In this embodiment, as shown in Fig. 2, the dummy lead wires 130 are similar to the drive wires 110 and the detection wires 120 in that each dummy lead wire 130 has a multilayer structure composed of a transparent conductive material, which is the material constituting the detection electrodes 12, and a metal-based material.

As viewed from a Z1-Z2 direction, the dummy lead wires 130 are located between the drive wires 110 and the detection wires 120. With the dummy lead wires 130 being provided between the drive wires 110 and the detection wires 120, the occurrence of crosstalk capacitance between the drive wires 110 and the detection wires 120 is suppressed.

As shown in Fig. 1 and Fig. 3, which is an enlarged plan view of area A therein, the non-detection region S2 is provided with anticorrosive sections 150A that are disposed between at least either of the drive wires 110 and the detection wires 120 and the dummy lead wires 130 and that are not in contact with any of the drive wires 110, the detection wires 120, and the dummy lead wires 130. In the capacitive sensor 1A according to this embodiment, each anticorrosive section 150A has a segment that is juxtaposed with the corresponding drive wire 110 or detection wire 120 in an in-plane direction (i.e., a direction including a component of the X1-X2 direction or the Y1-Y2 direction) of the principal surface 10a of the substrate 10. In other words, each anticorrosive section 150A has a segment provided parallel to the corresponding drive wire 110 or detection wire 120 with a predetermined distance therebetween.

Each anticorrosive section 150A may be provided outside the outermost wire among a group of multiple parallel drive wires 110 or detection wires 120 while being separated therefrom by a predetermined distance, or may be provided adjacent to a drive wire 110 or detection wire 120 disposed independently (in isolation) while being separated therefrom by a predetermined distance. Furthermore, a single anticorrosive section 150A or multiple anticorrosive sections 150A may be disposed in a region adjacent to the corresponding drive wire 110 or detection wire 120.

As mentioned above, non-wiring-installation regions of about several tens of µm (e.g., about 50 µm) may sometimes exist between the drive wires 110 and the dummy lead wires 130 as well as between the detection wires 120 and the dummy lead wires 130, so that the IC for applying electric potential to the dummy lead wires 130 can be properly driven. In this case, if the anticorrosive sections 150A are not provided, the wires (the drive wires 110 and the detection wires 120) adjacent to these non-wiring-installation regions tend to corrode easily due to being isolated sections.

By providing the anticorrosive section 150A in the non-wiring-installation regions, corrosion of the drive wires 110 and the detection wires 120 that are isolated sections is suppressed. In detail, since the attack on the isolated sections by corrosion-causing substances including moisture surrounding the drive wires 110 and the detection wires 120 and a leachate component (such as iodine or acrylic acid) from the constituent members also affect the anticorrosive sections 150A serving as sacrificial sections, corrosion is prevented from concentrating in the drive wires 110 and detection wires 120 that are isolated sections. In other words, since corroded areas are distributed in accordance with the installation of the anticorrosive sections 150A, corrosion of the drive wires 110 and detection wires 120 that are isolated sections is suppressed.

Furthermore, in the capacitive sensor 1A, each anticorrosive section 150A has a segment that is juxtaposed with the corresponding drive wire 110 or detection wire 120 and has an extension segment 151 extending in the extending direction of the drive wire 110 or detection wire 120, so that the anticorrosive section 150A protects a wide range in the extending direction of the drive wire 110 or detection wire 120.

As described above, the purpose of each anticorrosive section 150A is to suppress isolation of the corresponding drive wire 110 or detection wire 120 and prevent corrosion concentration by being disposed along the wire. Therefore, the material constituting the anticorrosive section 150A is not limited, and may be a conductive material or a nonconductive material. From the standpoint of causing the IC for applying electric potential to the dummy lead wires 130 to function properly, each anticorrosive section 150A may preferably be composed of a conductive material rather than a nonconductive material, that is, a dielectric material. In this embodiment, the anticorrosive sections 150A are composed of a conductive material, and as mentioned above, each have a multilayer structure composed of a transparent conductive material, which is the material constituting the detection electrodes 12, and a metal-based material, similarly to the drive wires 110 and the detection wires 120.

If the anticorrosive sections 150A are composed of a conductive material, as mentioned above, the electric potential of the anticorrosive sections 150A is preferably floating. This can enhance the corrosion prevention effect of the drive wires 110 and detection wires 120 that are isolated sections, and can stably suppress the occurrence of crosstalk capacitance between the drive wires 110 and the detection wires 120.

The anticorrosive sections 150A may be provided adjacent to not only the isolated drive wires 110 and detection wires 120 by being adjacent to the dummy lead wires 130 but also to the isolated drive wires 110 and detection wires 120 due to another reason. As shown in Fig. 1, in this embodiment, the anticorrosive sections 150A are also provided in an area that is an isolated section due to wires not being juxtaposed, an area that is an isolated section due to being the outermost wire among a group of parallel drive wires 110 or detection wires 120, an area that is an isolated section due to being adjacent to a frame wire 132 disposed surrounding the detection region S1 and the non-detection region S2, and so on.

### (Other Examples of Anticorrosive Sections)

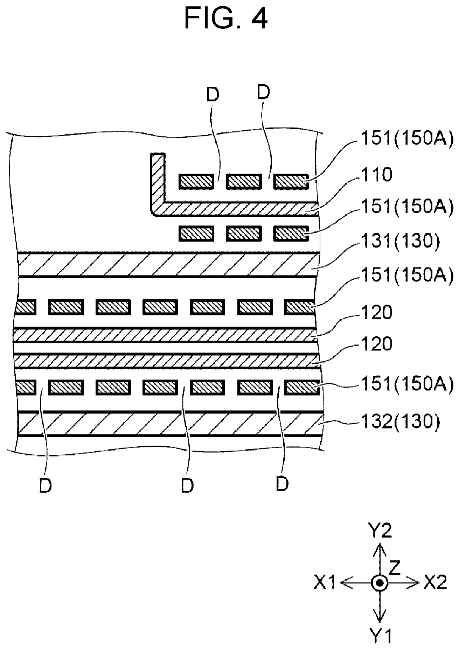

Fig. 4 is an enlarged plan view illustrating another example (1) of anticorrosive sections. Fig. 4 illustrates the configuration of another example (1) of anticorrosive sections in an area corresponding to area A shown in Fig. 1.

The extension segment 151 of each anticorrosive section 150A shown in Fig. 4 extends discontinuously in the extending direction of the corresponding drive wire 110 or detection wire 120. Specifically, the extension segment 151 is provided with discontinuous segments (gap segments D) at intermediate locations in the extending direction. If each anticorrosive section 150A is composed of a conductive material and is floating, parasitic capacitance occurs in the anticorrosive section 150A. This parasitic capacitance increases with increasing volume of the anticorrosive section 150A. This parasitic capacitance may possibly have an effect on the capacitance of a wire (drive wire 110 or detection wire 120) disposed adjacent to the anticorrosive section 150. In view of this, as shown in Fig. 4, the anticorrosive sections 150A extend discontinuously so that the parasitic capacitance occurring in each anticorrosive section 150A is reduced, whereby a wire (drive wire 110 or detection wire 120) that is an isolated section disposed adjacent to the anticorrosive section 150A is less likely to be affected by the parasitic capacitance of the anticorrosive section 150A.

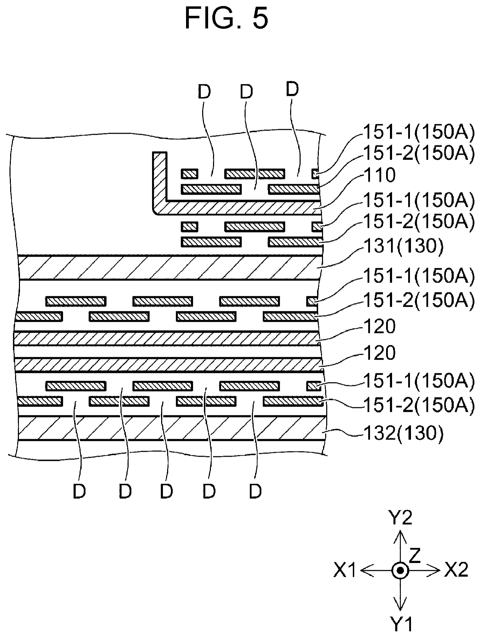

Fig. 5 is an enlarged plan view of another example (2) of anticorrosive sections. Fig. 5 illustrates the configuration of another example (2) of anticorrosive sections in an area corresponding to area A shown in Fig. 1.

Each anticorrosive section 150A shown in Fig. 5 has multiple (e.g., two) parallel extension segments 151-1 and 151-2. The extension segments 151-1 and 151-2 extend discontinuously in the extending direction of the corresponding drive wire 110 or detection wire 120 and respectively have the discontinuous segments (gap segments D) that are alternately arranged. In detail, the gap segments D are formed along the principal surface 10a between adjacent extension segments 151-1 and 151-1 formed along the principal surface 10a (see Fig. 1), as well as between adjacent extension segments 151-2 and 151-2. The gap segments D of the extension segments 151-1 and the gap segments D of the extension segments 151-2 do not overlap each other in a direction (Y1-Y2 direction in Fig. 5) orthogonal to the extending direction (X1-X2 direction in Fig. 5) of the corresponding drive wire 110 or detection wire 120. Therefore, in this direction (Y1-Y2 direction in Fig. 5), the creepage distance for moisture or a leachate component (such as iodine or acrylic acid), from the constituent members, attempting to penetrate toward the drive wire 110 or detection wire 120 becomes longer.

Accordingly, a situation where a corrosion-causing substance approaches the isolated wires (drive wires 110 and detection wires 120) by passing through the gaps (gap segments D) in the discontinuously-extending anticorrosive sections 150A is suppressed more stably. Specifically, the configuration shown in Fig. 11 enables both improved corrosion resistance of the wires due to the anticorrosive sections 150A provided, and suppression of any decrease in the detection accuracy of the capacitive sensor caused as a result of the anticorrosive sections 150A extending in a discontinuous manner.

### (Second Embodiment)

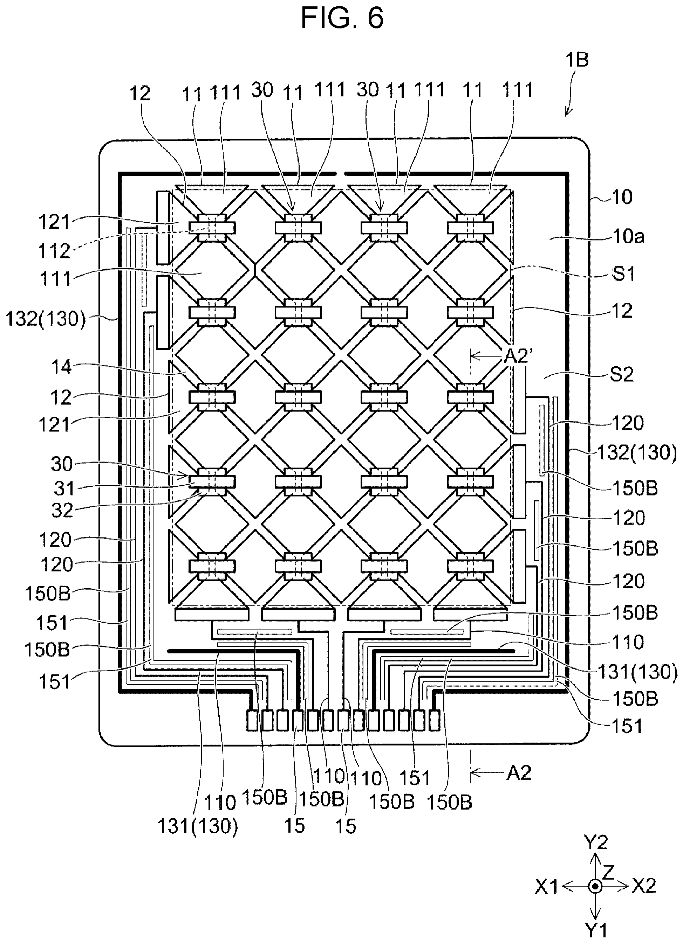

Fig. 6 is a schematic plan view illustrating a capacitive sensor according to a second embodiment.

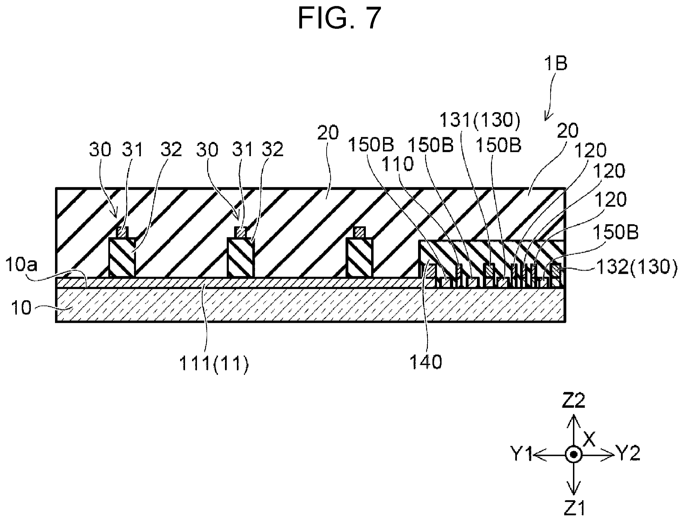

Fig. 7 is a schematic cross-sectional view illustrating the capacitive sensor according to the second embodiment, taken along line A2-A2' shown in Fig. 6.

A capacitive sensor 1B according to the second embodiment is similar to the capacitive sensor 1A in that the capacitive sensor 1B includes the detection region S1 that has the drive electrodes 11 and the detection electrodes 12 on the substrate 10, the non-detection region S2 that is located outside the detection region S1 and that has the drive wires 110 connected to the drive electrodes 11 and the detection wires 120 connected to the detection electrodes 12, and the dummy lead wires 130 provided in the non-detection region S2, but is different in that the capacitive sensor 1B includes anticorrosive sections 150B in place of the anticorrosive sections 150A.

The anticorrosive sections 150B of the capacitive sensor 1B are not in contact with any of the drive wires 110, the detection wires 120, and the dummy lead wires 130 and are similar to the anticorrosive sections 150A of the capacitive sensor 1A in terms of the basic configuration. However, the anticorrosive sections 150B are different from the anticorrosive sections 150A in that the anticorrosive sections 150B are composed of the same material and have the same structure as the first transparent electrodes 111 or the second transparent electrodes 121 constituting the drive electrodes 11 or the detection electrodes 12. With the anticorrosive sections 150B having such a structure, the anticorrosive sections 150B can be formed in the same process as the drive electrodes 11 or the detection electrodes 12.

With such anticorrosive sections 150B disposed, isolation of the drive wires 110 and the detection wires 120 is prevented, and the anticorrosive sections 150B function as sacrificial sections when a corrosion-causing substance attempts to penetrate from around the wires.

Since the anticorrosive sections 150B are composed of a conductive material, similarly to the anticorrosive sections 150A, the electric potential of the anticorrosive sections 150B is preferably floating. This can suppress isolation of the drive wires 110 and the detection wires 120 and can enhance the corrosion prevention effect of the drive wires 110 and the detection wires 120. In addition, the occurrence of crosstalk capacitance between the drive wires 110 and the detection wires 120 can be suppressed more stably. The capacitive sensor 1B according to this embodiment is similar to the capacitive sensor 1A according to the first embodiment in that the anticorrosive sections 150B are also provided at the isolated drive wires 110 and detection wires 120 due to a reason other than being adjacent to the dummy lead wires 130.

Although the embodiments have been described above, the present invention is not limited to these examples. For example, with regard to the material of each section, a material other than that described above is applicable if advantageous effects similar to the present invention can be achieved. Furthermore, an embodiment in which a component is appropriately added to, deleted from, or changed in design in each of the above embodiments by a skilled person or an embodiment obtained by appropriately combining the features of the embodiments is included in the scope of the present invention so long as the embodiment includes the gist of the present invention.

For example, because a corrosion-causing substance often approaches the wires (the drive wires 110 and the detection wires 120) from the operation surface (i.e., the Z2 side in the Z1-Z2 direction), the anticorrosive sections 150A or 150B may be spaced apart from the substrate 10, that is, spaced apart from the substrate toward the Z2 side in the Z1-Z2 direction. Alternatively, the insulation layer 140 covering the wires (the drive wires 110 and the detection wires 120) may be provided with a member having an anticorrosion function so as to have an overlapping segment, as viewed from the first direction (Z1-Z2 direction). This member may be continuous with an anticorrosive section (anticorrosive section 150A or anticorrosive section 150B). In that case, the anticorrosive section (anticorrosive section 150A or anticorrosive section 150B) has a segment overlapping the corresponding wire (drive wire 110 or detection wire 120), as viewed from the first direction (Z1-Z2 direction).

### Reference Signs List

- 1A, 1B: capacitive sensor
- 10: substrate
- 10a: principal surface
- 11: drive electrode
- 12: detection electrode
- 14: insulation section
- 15: pad electrode
- 20: protection layer
- 30: bridge section
- 31: bridge wire
- 32: insulation layer
- 110: drive wire
- 111: first transparent electrode
- 112: coupling section
- 120: detection wire
- 121: second transparent electrode
- 130: dummy lead wire
- 131: shielding wire
- 132: frame wire
- 140: insulation layer
- 150A,: 150B anticorrosive section
- 151,: 151-1, 151-2 extension segment
- D gap: segment
- S1: detection region
- S2: non-detection region

## Claims

1. A capacitive sensor comprising:
a detection region having a drive electrode and a detection electrode on a substrate; and
a non-detection region that is located outside the detection region as viewed from a normal direction to the substrate and that has a drive wire connected to the drive electrode and a detection wire connected to the detection electrode,
wherein the non-detection region includes
a dummy lead wire disposed apart from the drive wire and the detection wire, and
an anticorrosive section that is disposed between at least one of the drive wire and the detection wire and the dummy lead wire and that is not in contact with any of the drive wire, the detection wire, and the dummy lead wire.

2. The capacitive sensor according to claim 1,
wherein the anticorrosive section has a segment that is juxtaposed with the drive wire or the detection wire in an in-plane direction of a surface of the substrate.

3. The capacitive sensor according to claim 1,
wherein the anticorrosive section has a segment that overlaps the drive wire or the detection wire as viewed from the normal direction to the substrate.

4. The capacitive sensor according to claim 1,
wherein the anticorrosive section includes a segment composed of a material identical to a material constituting the drive electrode or the detection electrode.

5. The capacitive sensor according to claim 1,
wherein the anticorrosive section is composed of a conductive material and has a floating potential.

6. The capacitive sensor according to claim 5,
wherein the anticorrosive section has an extension segment that extends in an extending direction of the drive wire or the detection wire.

7. The capacitive sensor according to claim 6,
wherein the extension segment extends discontinuously in the extending direction of the drive wire or the detection wire.
